# EUROPEAN PATENT APPLICATION

(11) **EP 4 353 353 A1**
(43) Date of publication of application: **17.04.2024**
(21) Application number: 22820111.7
(22) Date of filing: 01.06.2022
(51) Int. Cl.: B01J 20/06, B01D 53/62, B01D 53/82, B01D 53/92, B01J 20/28, B01J 20/30, C01B 32/50, C01G 49/00

(54) **SOLID MATERIAL FOR RECOVERING CARBON DIOXIDE, AND METHOD FOR PRODUCING SAME**

(30) Priority: 07.06.2021 JP 2021095261; 07.06.2021 JP 2021095262
(71) Applicant: Toda Kogyo Corp., Hiroshima-shi, Hiroshima 732-0828 (JP)
(72) Inventor: SAKAMOTO Muneyoshi, Otake-shi, Hiroshima 739-0652 (JP); SHIBA Mitsuya, Otake-shi, Hiroshima 739-0652 (JP); SHIMO Nobuya, Otake-shi, Hiroshima 739-0652 (JP); KURITA Eiichi, Otake-shi, Hiroshima 739-0652 (JP)
(74) Representative: Cabinet Becker et Associés
(86) International application number: PCT/JP2022/022250
(87) International publication number: WO 2022/259929

(57) **Abstract**

The present invention is a solid material for recovering carbon dioxide, the solid material including from 50% by weight to 99% by weight of sodium ferrite and from 1% by weight to 50% by weight of an organic binder or an inorganic binder, having an average particle diameter of 1 mm to 10 mm, and having a specific surface area of 1 m²/g to 50 m²/g, wherein an axial ratio of an average major axis diameter to an average minor axis diameter of primary particles of the sodium ferrite is from 1 to 2.

## Description

### Technical Field

The present invention relates to solid materials for fixing and recovering carbon dioxide and methods for producing the solid materials and specifically relates to a solid material including sodium ferrite for recovery and a method for producing the solid material.

### Background Art

Studies on capturing and storing carbon dioxide as well as its recovery and utilization have been underway to reduce the amount of the carbon dioxide released into the atmosphere. Examples of a large-scale source of carbon dioxide include thermal power stations, boilers of factories, and kilns of cement factories using, for example, coal, heavy oil, or natural gas as a fuel. Other examples are blast furnaces of ironworks where iron oxide is reduced by cokes and transportation vehicles, such as automobiles, marine vessels, and aircraft, using, for example, gasoline, heavy oil, or light oil as a fuel.

Currently, large-scale facilities such as thermal power stations fix and recover carbon dioxide with an amine aqueous solution. This method uses a recovery material in liquid form and thus has the advantage that the recovery material can be transported with a pump.

The method described above, however, uses a liquid including a hazardous material and is thus difficultly used in medium to small-scale facilities such as waste incineration plants. Consequently, carbon dioxide is rarely fixed and recovered at present. Therefore, a solid material made of a solid, in particular, a non-hazardous inorganic material, for recovering carbon dioxide is in demand. An example of conventional solid materials for recovering carbon dioxide is, as disclosed in, for example, PTL 1 and PTL 2, a carbon dioxide recovery material containing sodium ferrite. In particular, in the case of α-sodium ferrite having a layered rock-salt structure (in a trigonal system), carbon dioxide and sodium topochemically react with each other. That is, during the reaction with carbon dioxide, the α-sodium ferrite forms a mixed phase of Na₁₋ₓFeC₂ and sodium carbonate. Therefore, it has been reported that the speed of this reaction is high and repetition performance of absorbing and releasing carbon dioxide through this reaction is excellent. In contrast, in the case of β-sodium ferrite in an orthorhombic system, sodium and carbon dioxide react with each other, and therefore, it has been reported that the absorbed amount of the carbon dioxide is larger in the crystal phase of the β-sodium ferrite than in the crystal phase of the α-sodium ferrite.

In general, the reaction of sodium ferrite with carbon dioxide is represented by the following formula: NaFeO₂ + 1/2CO₂ → 1/2Na₂CO₃ + 1/2Fe₂O₃, where a gas includes no water vapor, or NaFeO₂ + CO₂ + 1/2H₂O → NaHCO₃ + 1/2Fe₂O₃, where the gas includes the water vapor. Therefore, the sodium ferrite is theoretically capable of adsorbing and desorbing from 18 to 28% by weight of carbon dioxide at maximum with respect thereto.

### Citation List

### Patent Literature

PTL 1: JP 2016-3156 A
PTL 2: JP 2017-109198 A

### Summary of Invention

### Technical Problem

The solid materials for recovering carbon dioxide described in PTL 1 and PTL 2 include, as described above, sodium ferrite and are assumed to be solid materials for recovery having relatively good absorbing performance for carbon dioxide in a low temperature range. However, a carbon dioxide recovery material having further enhanced fixation and recovery performance for carbon dioxide is still in demand, and therefore, further improvement in the characteristic of the sodium ferrite in a form to be mounted on a carbon dioxide recovery device is required in addition to improving the characteristic of the sodium ferrite itself. Specifically, sodium ferrite powder is operationally difficultly handled in its powder form. In particular, when an adsorption tower is filled with sodium ferrite, fine powder of the sodium ferrite is close-packed and easily leads to pressure loss, and therefore, the sodium ferrite powder is used by being granulated into a predetermined shape. Therefore, the composition and the physical property of the carbon dioxide recovery material containing sodium ferrite in a granulated state become important.

In view of the problem described above, it is an object of the present invention to provide a solid material for recovering carbon dioxide and a method for producing the solid material, wherein the solid material is capable of fixing carbon dioxide in a low temperature range, for example, from a room temperature to 200°C and recovering the carbon dioxide when heated to 50°C to 200°C, and is thus excellent in fixation and recovery performance.

### Solution to Problems

To achieve the object, in the present invention, sodium ferrite is molded by using an organic binder or an inorganic binder under a predetermined condition so as to be able to adsorb carbon dioxide in a temperature range from a room temperature to 200°C and highly efficiently recover the carbon dioxide thus adsorbed when heated to 50°C to 200°C.

Specifically, a solid material for recovering carbon dioxide according to the present invention is a solid material, including from 50% by weight to 99% by weight of sodium ferrite and from 1% by weight to 50% by weight of an organic binder or an inorganic binder, for recovering carbon dioxide, wherein the solid material has an average particle diameter of 1 mm to 10 mm and has a specific surface area of 1 m²/g to 50 m²/g, and an axial ratio of an average major axis diameter to an average minor axis diameter of primary particles of the sodium ferrite is from 1 to 2.

According to the solid material for recovering carbon dioxide of the present invention, the organic binder or the inorganic binder promotes aggregation of sodium ferrite particles, which enables a molded body containing sodium ferrite at a high concentration to be formed. Thus, the solid material, including the sodium ferrite and the organic binder or the inorganic binder, for recovering carbon dioxide according to the present invention is capable of having excellent performance of adsorbing the carbon dioxide in a gas, confining the carbon dioxide in a solid, and releasing the carbon dioxide when heated. Moreover, when the average particle diameter is from 1 mm to 10 mm, a flow path for an exhaust gas and the like can be secured without reducing the pressure loss due to close-packed fine powder when the solid material is filled in the adsorption tower and the like. As a result, the carbon dioxide can be efficiently fixed. When the specific surface area is less than 1 m²/g, the solid material is difficult to come into contact with carbon dioxide in the gas, thereby reducing the fixation and recovery performance for carbon dioxide. When the specific surface area is greater than 50 m²/g, the solid material is difficult to be industrially produced. Moreover, since the axial ratio of the average major axis diameter to the average minor axis diameter of the primary particles of the sodium ferrite is from 1 to 2, that is, small, and the shape of the primary particles is almost spherical, and therefore, the dispersibility is high, so that the primary particles are less likely to aggregate, thereby improving moldability and/or workability. According to the solid material for recovering carbon dioxide of the present invention, a combination of these characteristics enables the carbon dioxide to be fixed in a temperature range from the room temperature to 200°C, enables the carbon dioxide to be recovered by heating to 50°C to 200°C, and is thus excellent in fixation and recovery performance.

The solid material for recovering carbon dioxide according to the present invention preferably has a hardness of 3 kgf/mm² to 30 kgf/mm² and an axial ratio of 1 to 5.

In this case, the solid material is less likely to break due to, for example, gravity and/or friction caused by a flow of an exhaust gas or the like when filled in the adsorption tower or the like, so that the exhaust gas or the like easily flows.

In the solid material for recovering carbon dioxide according to the present invention, a powder pH value is preferably from 8 to 14.

According to this configuration, the solid material for recovering carbon dioxide according to the present invention is basic and thus easily captures the carbon dioxide which is weakly acidic.

In the solid material for recovering carbon dioxide according to the present invention, a molar ratio of Na/Fe of the sodium ferrite is preferably from 0.7 to 1.3.

Since the molar ratio of Na/Fe is from 0.7 to 1.3, a large number of sodium ferrite crystal phases can be included, so that the fixation and recovery performance for carbon dioxide is satisfactory.

The solid material for recovering carbon dioxide according to the present invention includes the organic binder, and the organic binder is preferably a polymer material selected from polystyrene, polyethylene, polypropylene, nitrile-butadiene, silicone, fluororesin, and cellulose.

Using the organic binder enables a molded body containing sodium ferrite at a high concentration to be formed and fixation and recovery ability for carbon dioxide to be enhanced.

The solid material for recovering carbon dioxide according to the present invention includes the inorganic binder, and the inorganic binder is preferably an inorganic material including one or more of Na, Li, K, Ca, Mg, Si, Al, Ca, Fe, and Zn.

Using the inorganic binder enables a molded body containing sodium ferrite at a high concentration to be formed and fixation and recovery ability for carbon dioxide to be enhanced.

A method for producing the solid material for recovering carbon dioxide according to the present invention includes: a step of performing solid-phase reaction of a material including iron oxide and an alkali compound including sodium to obtain powder and a step of kneading the powder obtained by the solid-phase reaction and an organic binder or an inorganic binder together to obtain a mixture and molding the mixture.

In the method for producing the fixation material for recovering carbon dioxide according to the present invention, a solid and a solid are mixed and reacted with each other by moving elements without using a solvent, and therefore, no solvent as reaction mother liquor is used, thereby reducing waste which is, for example, a solvent when used for liquid phase reaction. In particular, solid-phase reaction at a low temperature may result in very-high-concentration reaction, so that energy cost is reduced. Thus, the method for producing the fixation material for recovering carbon dioxide according to the present invention can produce a carbon dioxide recovery material which is capable of fixing the carbon dioxide in a temperature range from the room temperature to 200°C and highly efficiently recovering the carbon dioxide thus fixed when heated to 50°C to 200°C, and which is thus excellent in fixation and recovery performance.

### Advantageous Effects of Invention

The solid material for recovering carbon dioxide of the present invention enables the carbon dioxide to be fixed in a temperature range from the room temperature to 200°C and enables the carbon dioxide to be highly efficiently recovered by heating to 50°C to 200°C, and thus, the solid material for recovering carbon dioxide can have excellent fixation and recovery performance for carbon dioxide.

### Brief Description of Drawings

FIG. 1 is a view of a result of thermogravimetric analysis after a solid material for recovering carbon dioxide obtained in Example 1 absorbs the carbon dioxide; and
FIG. 2 is a view of a result of thermogravimetric analysis after a solid material for recovering carbon dioxide obtained in Example 10 absorbs the carbon dioxide.

### Description of Embodiments

Embodiments of the present invention will be described below. The following description of a preferable embodiment is substantially a mere example and should not be construed as limiting the present invention, the application method thereof, or the application thereof.

First of all, a solid material for recovering carbon dioxide according to an embodiment of the present invention will be described.

The solid material for recovering carbon dioxide according to the present embodiment includes from 50% by weight to 99% by weight of sodium ferrite and from 1% by weight to 50% by weight of an organic binder or an inorganic binder. In the case of the above-described range of % by weight, the solid material for recovering carbon dioxide according to the present embodiment enables a molded body containing sodium ferrite at a high concentration to be formed while fixation and recovery performance, which the sodium ferrite intrinsically has, for carbon dioxide is maintained.

The solid material for recovering carbon dioxide according to the present embodiment has an average particle diameter of 1 mm to 10 mm and a specific surface area of 1 m²/g to 50 m²/g. In the case of the average particle diameter being less than 1 mm, when the solid material for recovering carbon dioxide according to the present embodiment is filled in an adsorption tower or the like, voids between powder particles are small, and therefore, pressure loss in the adsorption tower is large. Therefore, a clog may be formed in the adsorption tower. In the case of the average particle diameter being greater than 10 mm, the ratio of contact between the sodium ferrite and the carbon dioxide decreases, thereby deteriorating the fixation and recovery performance for carbon dioxide. The average particle diameter of the solid material for recovering carbon dioxide is preferably from 2 mm to 8 mm. Moreover, when the specific surface area is less than 1 m²/g, the sodium ferrite is less likely to come into contact with carbon dioxide in the gas, thereby deteriorating the fixation and recovery performance for carbon dioxide. When the specific surface area is greater than 50 m²/g, industrial production becomes difficult. The specific surface area of the solid material for recovering carbon dioxide is preferably from 2 m²/g to 30 m²/g.

In the solid material for recovering carbon dioxide according to the present embodiment, an axial ratio of an average major axis diameter to an average minor axis diameter (average major axis diameter/average minor axis diameter) of primary particles of the sodium ferrite thus contained is preferably from 1 to 2. When the axial ratio is greater than 2, the primary particles tend to aggregate, and maintaining a high dispersibility of the sodium ferrite becomes difficult. Moreover, the axial ratio cannot be less than 1. The axial ratio of the primary particles of the sodium ferrite thus contained is preferably from 1.1 to 1.9.

The solid material for recovering carbon dioxide according to the present embodiment preferably has a hardness of 3 kgf/mm² to 30 kgf/mm². In the case of the hardness in the above-described range, the carbon dioxide recovery material according to the present embodiment is less likely to break due to gravity and/or friction or the like caused by a flow of an exhaust gas or the like when filled in the adsorption tower or the like, so that the exhaust gas or the like easily flows.

The shape of the solid material for recovering carbon dioxide is not particularly limited but is preferably cylindrical, spindle, rectangular parallelepiped, dice, or spherical. The axial ratio is the length of a minor axis divided by the length of a major axis of the solid material for recovering carbon dioxide and is preferably from 1 to 5. When the axial ratio is greater than 5, there may be many voids when the solid material is filled in the adsorption tower. Moreover, the axial ratio cannot be less than 1. The axial ratio is more preferably from 1.5 to 4.

The solid material for recovering carbon dioxide according to the present embodiment preferably has a powder pH value of 8 to 14. When the powder pH value is from 8 to 14, the solid material for recovering carbon dioxide according to the present embodiment is basic and thus easily captures the carbon dioxide which is weakly acidic.

In the solid material for recovering carbon dioxide according to the present embodiment, a molar ratio of Na/Fe of the sodium ferrite is preferably from 0.7 to 1.3. When the molar ratio is in the above-described range, a large number of sodium ferrite crystal phases can be included, so that the fixation and recovery performance for carbon dioxide is satisfactory.

The organic binder according to the present embodiment is preferably a polymer material selected from polystyrene, polyethylene, polypropylene, nitrile-butadiene, silicone, a fluororesin, and cellulose. Since the organic binder has excellent moldability, the organic binder enables a molded body containing sodium ferrite at a high concentration to be formed and fixation and recovery ability for carbon dioxide to be enhanced.

The organic binder according to the present embodiment preferably has a weight-average molecular weight of 1,000 to 100,000. When the weight-average molecular weight is less than 1,000, the molded body is too soft and may reduce the strength of the molded body. When the weight-average molecular weight is greater than 100,000, the organic binder is too hard and may make formation of the molded body difficult.

The inorganic binder according to the present embodiment is preferably an inorganic material including one or more of Na, Li, K, Ca, Mg, Si, Al, Ca, Fe, and Zn. The inorganic binder has excellent moldability, which enables a molded body containing sodium ferrite at a high concentration to be formed, thereby improving the fixation and recovery ability for carbon dioxide.

Moreover, the inorganic binder is an inorganic material which includes one or more of Na, Li, K, Ca, Mg, Si, Al, Ca, Fe, and Zn and which as an inorganic solid, functions as a binder. The inorganic solid is obtained in such a way that a fluent inorganic material, such as silicate, metallic phosphate, metal alcoholate, organopolysiloxane, organo-mineral complex polymer, alumina sol, synthetic mica, phosphonitrilic chloride, or cement is kneaded together with the sodium ferrite to obtain a mixture, which is molded into an appropriate size and is dried by, for example, applying heat energy.

Examples of the silicate include: water-soluble silicate such as sodium silicate, potassium silicate, lithium silicate, and ammonium silicate; colloidal silica; and organic metal siliconate. Examples of the metallic phosphate include aluminum phosphate, magnesium phosphate, calcium phosphate, iron phosphate, and zinc phosphate. Examples of the metal alcoholate include alcoholates of silicon, aluminum, tin, titanium, and zirconium. Examples of the organopolysiloxane include silicone and alkyl silicate such as ethyl silicate, butyl silicate, phenyl silicate, octyl silicate, and lauryl silicate. Examples of the organo-mineral complex polymer include a mixture such as an emulsion mixture and an aqueous resin mixture, and a grafting compound such as organic polymers grafting to glass and mineral. Examples of the alumina sol include feather-like particles and granular particles. The synthetic mica is a silica mineral represented by the formula: KMg₃AlSi₃O₁₀F₂, where examples of the synthetic mica include a silica mineral with K substituted with Na, Ca, Sr, or Ba; a silica mineral with some of Mg substituted with Al, Fe²⁺, Ni, Co, Mn, Li, or Zn; a silica mineral with Al substituted with Zn, Be, B, Co, Mn, Li, or Zn; and a silica mineral with Al substituted with Zn, Be, B, Co, or Fe. Examples of phosphonyl chloride include various compounds as polyphosphazene derivatives. Examples of the cement include Portland cement and alumina cement.

The solid material for recovering carbon dioxide according to the present embodiment can selectively adsorb and fix the carbon dioxide from a gas including the carbon dioxide. The adsorption temperature is from the room temperature to an exhaust gas outlet temperature, namely, approximately from 10°C to 200°C. Additionally heating from outside is not required, and therefore, energy cost relating to adsorption can be suppressed (up to here, carbon dioxide fixation step).

Preferably, the solid material for recovering carbon dioxide according to the present embodiment desorbs the carbon dioxide, captured in the carbon dioxide fixation step described above, at a temperature of 50°C to 200°C and recovers the carbon dioxide under a gas atmosphere including no carbon dioxide. The desorption temperature is as low as 200°C or lower, and therefore, energy cost relating to desorption is suppressed (up to here, carbon dioxide recovery step).

Next, the method for producing the solid material for recovering carbon dioxide according to the embodiment of the present invention will be described.

The solid material for recovering carbon dioxide according to the present embodiment is produced by: a step of performing solid-phase reaction of a material including iron oxide and an alkali compound including sodium to obtain powder; and a step of kneading the powder obtained by the solid-phase reaction and an organic binder or an inorganic binder together to obtain a mixture and molding the mixture.

The solid-phase reaction of the material including iron oxide and the alkali compound including sodium enables sodium ferrite to be manufactured which has the function of absorbing and desorbing carbon dioxide without using any solvent. Moreover, as a feature of the solid-phase reaction, the crystal growth of the sodium ferrite tends to be isotropic, and therefore, the axial ratio of the primary particles tends to be suppressed. The sodium ferrite and the organic binder or the inorganic binder are kneaded together, are extrusion molded, and are baked or dried, which tends to form a molded body containing the sodium ferrite at a high concentration. This improves the fixation performance for recovering carbon dioxide, and the sodium ferrite with the carbon dioxide is thus preferable as the solid material for recovering carbon dioxide.

As a specific production method, first of all, iron oxide and sodium source powder are mixed with each other, are pulverized, and are baked, thereby obtaining sodium ferrite particle powder. Then, the sodium ferrite particle powder thus obtained and the organic binder or the inorganic binder are kneaded together with, for example, a double arm kneader, a screw kneader, a muller mill, a Plough mixer, or a planetary mixer, and are molded by using an extruder such as a screw extruder or a roller extruder to obtain a molded product. Then, drying or baking of the molded product is performed, thereby obtaining a solid material for recovering carbon dioxide. For the baking, steam heating, microwave heating, ultrasonic wave heating, or the like may be used alternatively to normal baking.

As the organic binder, for example, a polymer material selected from polystyrene, polyethylene, polypropylene, nitrile-butadiene, silicone, a fluororesin, and cellulose may be used. Moreover, the inorganic binder is an inorganic material which includes one or more of Na, Li, K, Ca, Mg, Si, Al, Ca, Fe, and Zn, for example, and which as an inorganic solid, functions as a binder. The inorganic solid is obtained in such a way that a fluent inorganic material, such as silicate, metallic phosphate, metal alcoholate, organopolysiloxane, organo-mineral complex polymer, alumina sol, synthetic mica, phosphonitrilic chloride, or cement is kneaded together with the sodium ferrite to obtain a mixture, which is molded into an appropriate size and is dried by, for example, applying heat energy. The contained amount of the organic binder or the inorganic binder is preferably from 1 % by weight to 50 % by weight. This is because forming a molded body containing sodium ferrite at high concentration enhances the fixation and recovery ability for carbon dioxide as described above.

Examples of a material including iron oxide are not particularly limited but may include hematite, magnetite, maghemite, and goethite.

Examples of a compound including sodium are not particularly limited but may include sodium nitrite, sodium hydroxide, sodium oxide, and sodium carbonate. Note that when industrial use is taken into consideration, sodium nitrite, sodium sulfate, and the like should be avoided since these compounds may generate, at the time of manufacturing, a nitrous acid gas, a sulfurous acid gas, and the like which are toxic.

In general, the solid-phase reaction is a synthesis method in which a solid and a solid are mixed and reacted with each other by moving elements without using a solvent. No solvent as reaction mother liquor is used, and therefore, waste of a solvent and the like as used in liquid-phase reaction is reduced. Moreover, the solid-phase reaction at a low temperature, which is a feature of the present invention, may result in very-high-concentration reaction, so that energy cost is reduced. Further, the high-concentration reaction and/or cleaning is not required, and therefore, high yield of the product can be expected.

### EXAMPLES

A typical embodiment of the present invention is as described below.

The sodium ferrite particle powder, which is the solid material for recovering carbon dioxide according to the present invention, and elements (except for oxygen) in raw materials of the sodium ferrite particle powder were analyzed by using scanning X-ray fluorescence spectrometer ZSX PrimusII manufactured by Rigaku Corporation.

Regarding the composition of inorganic components of the solid material for recovering carbon dioxide according to the present invention, the solid material for recovering carbon dioxide was pulverized by using a mortar, was pelletized, and was then subjected to identification by using a fully-automatic multi-purpose X-ray diffraction device D8 ADVANCE manufactured by BRUKER, and as a result, α-sodium ferrite contained was identified, and when an inorganic binder was used as the binder, the inorganic binder thus contained was identified.

Regarding the composition of organic components of the solid material for recovering carbon dioxide according to the present invention, the solid material for recovering carbon dioxide was pulverized by using a mortar, was mixed with potassium bromide, and was pelletized, and was then subjected to identification by using portable FT-IR (Fourier transform infrared spectrophotometer) "Niclet iS5" manufactured by Thermo Scientific, and as a result, it was identified that the composition was identical with that of an organic binder thus added.

When the organic binder was used as the binder, regarding the contained amounts of natrium ferrite and the organic binder in the solid material for recovering carbon dioxide according to the present invention, the solid material for recovering carbon dioxide was pulverized by using a mortar, part of the pulverized material was heated from the room temperature to 200°C by Simultaneous Thermogravimetric Analyzer STA7000 manufactured by Hitachi High-Tech Corporation, and loss of the adsorbed amount on heating was defined as an organic binder component, and the remaining portion was defined as the sodium ferrite portion.

The average particle diameter of the solid material for recovering carbon dioxide according to the present invention was defined as an average value of major axes and minor axes of 80 particles measured with a caliper.

The BET specific surface area of the solid material for recovering carbon dioxide according to the present invention was measured by a BET method using nitrogen with a Multisorb-16 manufactured by QUANTA CHROME.

The hardness of the solid material for recovering carbon dioxide according to the present invention was defined as an average value of compressive hardnesses of 80 particles measured with a digital force gauge ZP-500N manufactured by IMADA CO., LTD.

The hardness of the solid material for recovering carbon dioxide according to the present invention was evaluated based on the following three criteria.
O : The compressive strength is greater than or equal to 10 kgf/mm²
Δ: The compressive strength is greater than or equal to 3 kgf/mm² and less than 10 kgf/mm²
×: The compressive strength is less than 3 kgf/mm²

Regarding the pH value of the solid material for recovering carbon dioxide according to the present invention, 5 g of sample were weighed in a 300 mL conical flask, 100 mL of boiling pure water were added in the flask and kept in a boiling state for about 5 minutes by heating, the flask was corked and allowed to cool to an ordinary temperature, water equivalent to a weight loss was added, and the flask was corked again, shaken for 1 minutes, and allowed to stand still for 5 minutes, thereby obtaining supernatant liquid, whose pH was measured in accordance with JIS Z8802-7 to obtain a value as the pH value.

To determine the molar ratio of Na/Fe of the sodium ferrite included in the solid material for recovering carbon dioxide according to the present invention, the solid material for recovering carbon dioxide was pulverized by using a mortar, was pelletized, and was then subjected to elemental analysis (except for oxygen) by using scanning fluorescent X-ray analyzer ZSX PrimusII manufactured by Rigaku Corporation.

Regarding the axial ratio of the sodium ferrite included in the solid material for recovering carbon dioxide according to the present invention, an average major axis diameter and an average minor axis diameter of the particle diameters of 350 primary particles shown in a micrograph taken by a scanning electron microscope S-4800 manufactured by Hitachi High-Tech Corporation were measured and were shown as a ratio of the average major axis diameter to the average minor axis diameter (average major axis diameter/average minor axis diameter).

The average primary particle diameter of sodium ferrite particle powder included in the solid material for recovering carbon dioxide according to the present invention was shown as an average value of the average major axis diameter and the average minor axis diameter.

In order to investigate the fixation and recovery ability for carbon dioxide of the solid material for recovering carbon dioxide according to the present invention, 1.00 part by weight of sample on a combustion boat was put in an acrylic tube equipped with pipes as an inlet and an outlet. From the inlet, a (carbon dioxide + nitrogen) mixture gas adjusted to have a humidity within a range from 20 to 100% and a carbon dioxide concentration within a range from 1 to 100 vol% was then introduced at 500 mL/min. A temperature was then raised, for the adsorbed amount of carbon dioxide after two hours, from a room temperature to 200°C by using a differential thermal thermogravimetry coincidence measurement device STA7000 manufactured by Hitachi High-Tech Corporation. From loss of the adsorbed amount on heating, the fixation and recovery amount of the carbon dioxide was determined.

### <Method for Producing Solid Material for Recovering Carbon Dioxide by Using Organic Binder>

### Example 1

Based on 100 parts by weight of iron oxide fine particle 1 (manufactured by TODA KOGYO CORP. 100ED, hematite, specific surface area 11 m²/g), sodium nitrite particle powder which is a sodium raw material was weighed such that Na/Fe=1.0 (molar ratio) and was mixed and pulverized with a sample mill to obtain a mixed pulverized product. The mixed pulverized product was put in a crucible and was baked at 400°C for 16 hours. Then, the mixed pulverized product was cooled to the room temperature and pulverized with a sample mill, thereby obtaining sodium ferrite particle powder. The BET specific surface area of the sodium ferrite particle powder was 4.0 m²/g. Quantification of primary particles by using scanning electron microscope resulted in that the average long axis diameter was 0.7 µm, the average short axis diameter was 0.4 µm, the average primary particle diameter was 0.55 µm, and the axial ratio was 1.8. The powder pH was 13.8 and relatively high. With a double arm kneader, 90 parts by weight of the sodium ferrite particle powder thus obtained, 10 parts by weight of polystyrene (weight-average molecular weight 12,000), and 20 parts by weight of methyl ethyl ketone were kneaded together to obtain a mixture. The mixture was extruded by using a roller extruder (opening 1 mm) and was rotated with a spheronizer, thereby obtaining cylindrical pellets each having a diameter of 1 mm and a length of 3 mm. These pellets were dried in a vacuum dryer at 80°C for 16 hours, thereby obtaining the solid material for recovering carbon dioxide. The solid material for recovering carbon dioxide was pulverized and was qualitatively evaluated by X-ray diffraction, and it was found that the solid material included sodium ferrite and a resin component. Moreover, qualitative evaluation was performed with FT-IR, and it was found that the resin component was polystyrene. Further, the pulverized product was heated by using Simultaneous Thermogravimetric Analyzer STA7000 manufactured by Hitachi High-Tech Corporation, and loss of the adsorbed amount on heating was defined as an organic binder component, and the remaining portion was defined as a sodium ferrite portion being the inorganic material. In this case, sodium ferrite was 90%, and polystyrene was 10%. The BET specific surface area of the solid material for recovering carbon dioxide was 4 m²/g. The short axis was 1 mm, the long axis was 3 mm, the axial ratio was 3, and the average particle diameter was 2 mm. The powder pH was 13.

The solid material for recovering carbon dioxide thus obtained had a hardness of 10 kgf/mm², which was evaluated as O. From these results, it is clear that the carbon dioxide recovery material according to Example 1 is less likely to break when filled in the carbon dioxide adsorption tower or the like, thereby allowing the exhaust gas or the like to easily flow.

The molar ratio of Na/Fe of the sodium ferrite included in the solid material for recovering carbon dioxide thus obtained was 1.0, equal to the feed ratio of the raw material.

In order to investigate the fixation and recovery performance for carbon dioxide of the solid material for recovering carbon dioxide thus obtained, 1.00 part by weight of sample was placed on No. 2 combustion boat (12 × 60 × 9 mm) and was aerated with a model combustion exhaust gas at 500 mL/min for two hours. In general, an exhaust gas produced when a fuel is burned in the atmosphere is constituted by 80 vol% nitrogen and 20 vol% carbon dioxide and has a relative humidity RH of 80 to 100% at maximum. Therefore, at a room temperature of 25°C, nitrogen at 400 mL/min and carbon dioxide at 100 mL/min were mixed with each other and were bubbled in water, thereby obtaining a model exhaust gas including 20 vol% carbon dioxide and having a relative humidity RH of 80%.

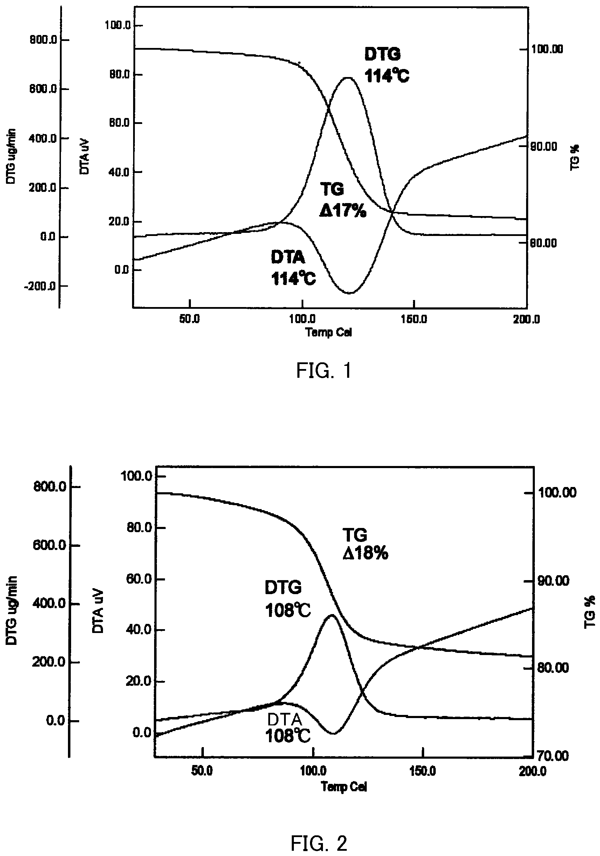

After the aeration, 10 mg of the sample were weighed, and while the sample was aerated with a dry air at 300 mL/min, the temperature of the sample was increased to 200°C at 10°C/min by using an apparatus for thermogravimetry (TG), and the desorption temperature and the desorption amount of the carbon dioxide adsorbed on the sample were measured. A measurement chart is shown in FIG. 1, where the abscissa axis shows the sample temperature. The TG curved line shows % by weight of a remaining sample at respective temperatures provided that the sample in an initial state is 100% by weight, and the decreased weight of the sample is regarded to correspond to released carbon dioxide. The DTG curved line is the differential curve of the TG curved line, where the temperature at a maximum value of the DTG curved line is regarded to be the desorption temperature of the carbon dioxide. The DTA curved line shows a curved line which is convex downward, and it can be seen that endothermic reaction occurred at about 114°C. This was deemed to be the heat decomposition of NaHCO₃ and was quantified, and thereby, it can be seen that the desorption temperature of the carbon dioxide is 114°C, the desorption amount of the carbon dioxide is 17% by weight with respect to the sample solid content, and the fixation and recovery performance for carbon dioxide is excellent.

Moreover, the sample after the aeration was reprepared and the weight thereof was measured, and as a result, the weight was 1.27 parts by weight, and consequently, an increment of mass by 27% by weight was determined. The X-ray diffraction at a surface of this sample was measured, and as a result, 79% by weight of Na₁₋ₓFeO₂ and 21% by weight of NaHCO₃ were determined, and thus, it was found that carbon dioxide was fixed on the sodium ferrite component. Further, this sample was heated in an electric furnace at 120°C for 1 hour, and the weight thereof was measured, and the weight was 1.10 parts by weight, and it was found that 0.17 parts by weight (with respect to the solid material for recovering carbon dioxide, 17% by weight) of carbon dioxide were able to be adsorbed and desorbed at this cycle. The X-ray diffraction at a surface of this sample was measured, and as a result, 90% by weight of Na₁₋ₓFeO₂ and 10% by weight of Na₂CO₃ were determined. Moreover, when carbon dioxide was brought into contact with this sample in a manner similar to that described above, the weight of the sample increased to 1.27 parts by weight, whereas when this sample was heated, the weight decreased to 1.10 parts by weight, and 0.17 parts by weight (17% by weight with respect to the solid material for recovering carbon dioxide) of carbon dioxide were able to be adsorbed and desorbed. This operation was repeated 10 times, and it was confirmed that there is no change in mass increment and mass decrement. This clarifies that the solid material for recovering carbon dioxide according to Example 1 has excellent fixation and recovery performance for carbon dioxide, in particular, is excellent in repetition performance.

### Examples 2 to 9

Solid materials for recovering carbon dioxide according to Examples 2 to 9 were obtained in the same manner as that explained in Example 1 except that the types and amounts of the iron raw material, the sodium source, and the organic binder were changed.

Table 1 shows production conditions for these examples, Table 2 shows characteristics of the solid materials for recovering carbon dioxide thus obtained, and Table 3 shows the effects of these examples.

### Comparative Example 1

While a small quantity of 1% carboxy methyl cellulose aqueous solution was added, 100 parts by weight of the sodium ferrite particle powder obtained in Example 1 were granulated at 40 rpm by using a tumbling granulator to obtain granules, which were then put in a crucible and were subjected to solid-phase reaction in a nitrogen airflow at 400°C for 16 hours. Thereafter, the granules were cooled to a room temperature, thereby obtaining the solid material for recovering carbon dioxide. The solid material for recovering carbon dioxide thus obtained was pulverized and qualitatively evaluated by X-ray diffraction, and as a result, sodium ferrite was identified. Moreover, fluorescent X-rays showed that the content of the sodium ferrite was 100%. The BET specific surface area of the solid material for recovering carbon dioxide was 4 m²/g. The minor axis was 4 mm, the major axis was 9 mm, and the average particle diameter was 6.5 mm. The powder pH value was 10.

The solid material for recovering carbon dioxide thus obtained had a hardness of 1 kgf/mm², which was evaluated as ×. These results clarify that filling of the carbon dioxide recovery material is difficult because the carbon dioxide recovery material is likely to break due to, for example, gravity and/or friction caused by a flow of an exhaust gas or the like when filled in the carbon dioxide adsorption tower or the like, and the carbon dioxide recovery material is non-uniform in shape.

Table 1 shows production conditions for this comparative example, Table 2 shows characteristics of the solid materials for recovering carbon dioxide thus obtained, and Table 3 shows the effects of these examples.

**[Table 1]**

| | Iron Oxide Raw Material | | | Sodium Raw Material | | Raw Material Feed Na/Fe | Baking | | Organic Binder | | | Drying | |
|---|---|---|---|---|---|---|---|---|---|---|---|---|---|
| | Type | Specific Surface Area (m²/g) | part by weight | Type | Part by Weight | (Molar Ratio) | Temperature (°C) | Time (Hour) | Type | Average Molecular Weight (Mw) | Additive Amount with Respect to 100 Parts by Weight Sodium Ferrite | Temperature (°C) | Time (Hour) |
| Example 1 | Hematite | 11 | 100 | Sodium Nitrite | 86 | 1.0 | 400 | 16 | Polystyrene | 12,000 | 11 | 80 | 16 |
| Example 2 | Hematite | 11 | 100 | Sodium Nitrite | 95 | 1.1 | 400 | 16 | Polystyrene | 30,000 | 2 | 80 | 16 |
| Example 3 | Magnetite | 8 | 100 | Sodium Hydroxide | 62 | 1.2 | 300 | 16 | Polystyrene | 50,000 | 67 | 80 | 16 |
| Example 4 | Magnetite | 8 | 100 | Sodium Hydroxide | 47 | 0.9 | 300 | 20 | Polyethylene | 10,000 | 11 | 60 | 20 |
| Example 5 | Maghemite | 20 | 100 | Sodium Hydroxide | 40 | 0.8 | 200 | 32 | Polypropylene | 10,000 | 11 | 60 | 32 |
| Example 6 | Maghemite | 8 | 100 | Sodium Oxide | 39 | 1.0 | 400 | 16 | Nitrile-butadiene | 5,000 | 11 | 80 | 16 |
| Example 7 | Goethite | 50 | 100 | Sodium Carbonate | 60 | 1.0 | 600 | 16 | Silicone | 3,000 | 11 | 100 | 16 |
| Example 8 | Hematite | 11 | 100 | Sodium Nitrite | 86 | 1.0 | 400 | 16 | Fluororesin | 1,500 | 11 | 60 | 16 |
| Example 9 | Magnetite + Goethite | 11, 50 | 50+50 | Sodium Nitrite | 84 | 1.0 | 400 | 16 | Cellulose | 2,000 | 11 | 80 | 16 |
| Comparative Example 1 | Hematite | 11 | 100 | Sodium Nitrite | 108 | 1.0 | 400 | 16 | - | - | - | 400 | 16 |

**[Table 2]**

| | Composition | | Particle Diameter | | | | Specific Surface Area | Hardness | Evaluation of Hardness | pH | Na/Fe | Contained Sodium Ferrite | | | |
|---|---|---|---|---|---|---|---|---|---|---|---|---|---|---|---|
| | Sodium Ferrite | Organic Binder | Minor Axis | Major Axis | Average Particle Diameter | Axial Ratio | | | | | | Average Major Axis Diameter (µm) | Average Minor Axis Diameter (µm) | Axial Ratio (Average Major Axis Diameter/ Average Minor Axis Diameter) | Average Primary Particle Diameter (µm) |
| | (% by weight) | (% by weight) | (mm) | (mm) | (mm) | | (m²/g) | (kgf/mm²) | | (-) | (Molar Ratio) | | | | |
| Example 1 | 90 | 10 | 1 | 3 | 2 | 3 | 4 | 10 | ○ | 13 | 1.0 | 0.7 | 0.4 | 1.8 | 0.55 |
| Example 2 | 98 | 2 | 1 | 3 | 2 | 3 | 3 | 5 | Δ | 13 | 1.1 | 0.6 | 0.5 | 1.2 | 0.55 |
| Example 3 | 60 | 40 | 1 | 3 | 2 | 3 | 2 | 15 | ○ | 10 | 1.2 | 0.8 | 0.5 | 1.6 | 0.65 |
| Example 4 | 90 | 10 | 2 | 5 | 3.5 | 2.5 | 7 | 11 | ○ | 13 | 0. 9 | 0.5 | 0.3 | 1.7 | 0.40 |
| Example 5 | 90 | 10 | 2 | 6 | 4 | 3 | 12 | a | Δ | 13 | 0. 8 | 0.4 | 0.3 | 1.3 | 0.35 |
| Example 6 | 90 | 10 | 2 | 5 | 3 | 2 | 3 | 13 | ○ | 13 | 1.0 | 0.4 | 0.3 | 1.3 | 0.35 |
| Example 7 | 90 | 10 | 2 | 5 | 3 | 2 | 22 | 13 | ○ | 13 | 1.0 | 0.4 | 0.3 | 1.3 | 0.35 |
| Example 8 | 90 | 10 | 2 | 3 | 2.5 | 2 | 5 | 12 | ○ | 11 | 1.0 | 0.4 | 0.3 | 1.3 | 0.36 |
| Example 9 | 90 | 10 | 2 | 3 | 2.5 | 2 | 10 | 16 | ○ | 12 | 1.0 | 0.4 | 0.3 | 1.4 | 0.34 |
| Comparative Example 1 | 100 | 0 | 4 | 9 | 6.5 | 2 | 4 | 1 | × | 10 | 1.0 | 2.3 | 0.6 | 3.8 | 1.45 |

**[Table 3]**

| | CO2 Recovery Temperature | CO2 Recovery Amount |
|---|---|---|
| | (°C) | (% by weight) |
| Example 1 | 114 | 17 |
| Example 2 | 116 | 18 |
| Example 3 | 115 | 10 |
| Example 4 | 104 | 15 |
| Example 5 | 102 | 14 |
| Example 6 | 121 | 16 |
| Example 7 | 105 | 16 |
| Example 8 | 102 | 15 |
| Example 9 | 101 | 16 |
| Comparative Example 1 | 130 | 10 |

As described above, the solid material for recovering carbon dioxide according to the present invention is obviously excellent in adsorption and recovery for the carbon dioxide. Moreover, the solid material for recovery is obtained by granulating sodium ferrite, which is a solid having carbon dioxide recovering performance, together with the organic binder to have a millimeter size, and the solid material has high hardness and may thus be filled in a carbon dioxide adsorbing tower as it is.

### <Method for Manufacturing Solid Material, Including Inorganic Binder, for Recovering Carbon Dioxide>

### Example 10

Iron oxide fine particles 1 (100ED manufactured by TODA KOGYO CORP., hematite, specific surface area 11 m²/g) were weighed to 100 parts by weight. Sodium nitrite particle powder which is a sodium raw material was weighed such that Na/Fe = 1.0 (molar ratio) with respect to the iron oxide fine particles, and the sodium nitrite particle powder was pulverized by using a sample mill to obtain a mixed pulverized product. The mixed pulverized product was put in a crucible and was baked at 400°C for 16 hours. Then, the mixed pulverized product was cooled to a room temperature and was pulverized by using a sample mill, thereby obtaining sodium ferrite particle powder. The BET specific surface area of the sodium ferrite particle powder thus obtained was 4.0 m²/g. As a result of quantification of primary particles by a scanning electron microscope, the average major axis diameter was 0.7 µm, the average minor axis diameter was 0.4 µm, the average primary particle diameter was 0.55 µm, and the axial ratio was 1.8. The powder pH value was 13.8 and was relatively high. With a double arm kneader, 90 parts by weight of sodium ferrite particle powder thus obtained, 10 parts by weight of sodium silicate, and 10 parts by weight of water were kneaded together to obtain a mixture. The mixture was extruded by using a roller extruder (opening 1 mm) and was rotated with a spheronizer, thereby obtaining cylindrical pellets each having a diameter of 1 mm and a length of 3 mm. The pellets were put in a baking furnace and baked at 200°C for 16 hours, thereby obtaining the solid material for recovering carbon dioxide. The solid material for recovering carbon dioxide thus obtained was pulverized and qualitatively evaluated by X-ray diffraction, and as a result, 90% sodium ferrite and 10% sodium silicate component were identified. The BET specific surface area of the solid material for recovering carbon dioxide was 3 m²/g. The minor axis was 1 mm, the major axis was 3 mm, the axial ratio was 3, and the average particle diameter was 2 mm. The powder pH value was 13.

The solid material for recovering carbon dioxide thus obtained had a hardness of 10 kgf/mm², which was evaluated as O. From these results, it is clear that the carbon dioxide recovery material according to Example 10 is less likely to break when filled in the carbon dioxide adsorption tower or the like, thereby allowing the exhaust gas or the like to easily flow.

The molar ratio of Na/Fe of the sodium ferrite included in the solid material for recovering carbon dioxide thus obtained was 1.0, substantially equal to the feed ratio of the raw material.

In order to investigate the fixation and recovery performance for carbon dioxide of the recovery material for carbon dioxide thus obtained, 1.00 part by weight of sample was placed on No. 2 combustion boat (12 × 60 × 9 mm) and was aerated with a model combustion exhaust gas at 500 mL/min for two hours. In general, an exhaust gas produced when a fuel is burned in the atmosphere is constituted by 80 vol% nitrogen and 20 vol% carbon dioxide and has a relative humidity RH of 80% to 100% at maximum. Therefore, at a room temperature of 25°C, nitrogen at 400 mL/min and carbon dioxide at 100 mL/min were mixed with each other and were bubbled in water, thereby obtaining a model exhaust gas including 20 vol% carbon dioxide and having a relative humidity RH of 80%.

After the aeration, 10 mg of the sample were weighed, and while the sample was aerated with a dry air at 300 mL/min, the temperature of the sample was increased to 200°C at 10°C/min by using an apparatus for thermogravimetry (TG), and the desorption temperature and the desorption amount of the carbon dioxide adsorbed on the sample were measured. A measurement chart is shown in FIG. 2, where the abscissa axis shows the sample temperature. The TG curved line shows % by weight of a remaining sample at respective temperatures provided that the sample in an initial state is 100% by weight, and the decreased weight of the sample is regarded to correspond to released carbon dioxide. The DTG curved line is the differential curve of the TG curved line, where the temperature at a maximum value of the DTG curved line is regarded to be the desorption temperature of the carbon dioxide. The DTA curved line shows a curved line which is convex downward, and it can be seen that endothermic reaction occurred at about 108°C. This was deemed to be the heat decomposition of NaHCO₃ and was quantified, and thereby, it can be seen that the desorption temperature of the carbon dioxide is 108°C, the desorption amount of the carbon dioxide is 18% by weight with respect to the sample solid content, and the fixation and recovery performance for carbon dioxide is excellent.

Moreover, the sample after the aeration was reprepared and the weight thereof was measured, and as a result, the weight was 1.28 parts by weight, and consequently, an increment of mass by 28% by weight was determined. The X-ray diffraction at a surface of this sample was measured, and thereby, 78% by weight of Na₁₋ₓFeO₂ and 22% by weight of NaHCO₃ were determined, and thus, it was found that carbon dioxide was fixed on the sodium ferrite component. Further, this sample was heated in an electric furnace at 120°C for 1 hour, and the weight thereof was measured, and the weight was 1.10 parts by weight, and it was found that 0.18 parts by weight (17% by weight with respect to the solid material for recovering carbon dioxide) of carbon dioxide were able to be adsorbed and desorbed at this cycle. The X-ray diffraction at a surface of this sample was measured, and thereby, 90% by weight of Na₁₋ₓFeO₂ and 10% by weight of Na₂CO₃ were determined. Moreover, when carbon dioxide was brought into contact with this sample in a manner similar to that described above, the weight of the sample increased to 1.28 parts by weight, whereas when this sample was heated, the weight decreased to 1.10 parts by weight, and 0.18 parts by weight (18% by weight with respect to the solid material for recovering carbon dioxide) of carbon dioxide were able be adsorbed and desorbed. This operation was repeated 10 times, and it was confirmed that there is no change in mass increment and mass decrement. This clarifies that the solid material for recovering carbon dioxide according to Example 10 has excellent fixation and recovery performance for carbon dioxide, in particular, is excellent in repetition performance.

### Examples 11 to 23

Solid materials for recovering carbon dioxide according to Examples 11 to 23 were obtained in the same manner as that explained in Example 10 except that the types and amounts of the iron raw material, the sodium source, and the inorganic binder were changed.

Table 4 shows production conditions for these examples, Table 5 shows characteristics of the solid materials for recovering carbon dioxide thus obtained, and Table 6 shows the effects of these examples.

### Comparative Example 1

As a comparative example, the same solid material as the above explained comparative example 1 was employed. Table 4 shows production conditions for the comparative example, Table 5 shows characteristics of the solid materials for recovering carbon dioxide thus obtained, and Table 6 shows the effects of the comparative example.

**[Table 4]**

| | Iron Oxide Raw Material | | | Sodium Raw Material | | Raw Material Feed | Baking | | Inorganic Binder | | | Baking | |
|---|---|---|---|---|---|---|---|---|---|---|---|---|---|
| | Type | Specific Surface Area (m²/g) | Part by Weight | Type | Part by Weight | (Molar Ratio) | Temperature (°C) | Time (Hour) | Type | Contained Meta | Additive Amount with Respect to 100 Parts by Weight Sodium Ferrite | Temperature (°C) | Time (Hour) |
| Example 10 | Hematite | 11 | 100 | Sodium Nitrite | 86 | 1.0 | 400 | 16 | Sodium Silicate | Na, Si | 11 | 200 | 16 |
| Example 11 | Hematite | 11 | 100 | Sodium Nitrite | 95 | 1.1 | 400 | 16 | Sodium Silicate | Na, Si | 2 | 200 | 16 |
| Example 12 | Magnetite | 8 | 100 | Sodium Hydroxide | 62 | 1.2 | 300 | 16 | Sodium Aluminosilicate | Na, Si, Al | 50 | 200 | 16 |
| Example 13 | Magnetite | 8 | 100 | Sodium Hydroxide | 47 | 0.9 | 300 | 20 | Lithium Silicate | Li, Si | 11 | 200 | 16 |
| Example 14 | Maghemite | 8 | 100 | Sodium Hydroxide | 32 | 0.8 | 200 | 32 | Potassium Silicate | K, Si | 11 | 200 | 16 |
| Example 15 | Maghemite | 8 | 100 | Sodium Oxide | 39 | 1.0 | 400 | 16 | Aluminum Phosphate | Al | 11 | 200 | 16 |
| Example 16 | Goethite | 12 | 100 | Sodium Carbonate | 60 | 1.0 | 600 | 16 | Magnesium Phosphate | Mg | 11 | 200 | 16 |
| Example 17 | Hematite | 11 | 100 | Sodium Nitrite | 86 | 1.0 | 400 | 16 | Calcium Phosphate | Ca | 11 | 200 | 16 |
| Example 18 | Hematite | 11 | 100 | Sodium Nitrite | 86 | 1.0 | 400 | 16 | Iron Phosphate | Fe | 11 | 200 | 16 |
| Example 19 | Hematite | 11 | 100 | Sodium Nitrite | 86 | 1.0 | 400 | 16 | Zinc Phosphate | Zn | 11 | 200 | 16 |
| Example 20 | Hematite | 11 | 100 | Sodium Nitrite | 86 | 1.0 | 400 | 16 | Tetraethoxysilane | Si | 11 | 100 | 16 |
| Example 21 | Hematite | 11 | 100 | Sodium Nitrite | 86 | 1.0 | 400 | 16 | Hexamethyldisiloxane | Si | 11 | 100 | 16 |
| Example 22 | Hematite | 11 | 100 | Sodium Nitrite | 86 | 1.0 | 400 | 16 | Alumina Sol | Al | 11 | 200 | 16 |
| Example 23 | Magnetite + Goethite | 11, 12 | 50+50 | Sodium Nitrite | 84 | 1.0 | 400 | 16 | Portland Cement | Ca, Al, Fe | 11 | 30 | 200 |
| Comparative Example 1 | Hematite | 11 | 100 | Sodium Nitrite | 108 | 1.0 | 400 | 16 | - | - | - | 400 | 16 |

**[Table 5]**

| | Composition | | | Particle Diameter | | | | Specific Surface Area | Hardness | Evaluation of Hardness | pH | Contained Sodium Ferrite | | | | |
|---|---|---|---|---|---|---|---|---|---|---|---|---|---|---|---|---|
| | Sodium Ferrite | Inorganic Binder Metal | Inorganic Binder | Minor Axis | Major Axis | Average Particle Diameter | Axial Ratio | | | | | Na/Fe | Average Major Axis Diameter (µm) | Average Minor Axis Diameter (µm) | Axial Ratio (Average Major Axis Diameter/ Average Minor Axis Diameter) | Average Primary Particle Diameter (µm) |
| | (% by weight) | | (% by weight) | (mm) | (mm) | (mm) | | (m²/g) | (kgf/mm²) | | (-) | (Molar Ratio) | | | | |
| Example 10 | 90 | Na, Si | 10 | 1.0 | 3.0 | 2.0 | 3.0 | 3 | 10 | ○ | 13 | 1.0 | 0.7 | 0.4 | 1.8 | 0.55 |
| Example 11 | 98 | Na, Si | 2 | 1.0 | 3.0 | 2.0 | 3.0 | 4 | 5 | Δ | 13 | 1.1 | 0.6 | 0.5 | 1.2 | 0.55 |
| Example 12 | 67 | Na, Si, Al | 33 | 1.0 | 3.0 | 2.0 | 3.0 | 3 | 28 | ○ | 13 | 12 | 0.8 | 0.5 | 1.6 | 0.65 |
| Example 13 | 90 | Li, Si | 10 | 2.0 | 5.0 | 3.5 | 2.5 | 11 | 11 | ○ | 13 | 0.9 | 0.5 | 0.3 | 1.7 | 0.40 |
| Example 14 | 90 | K, Si | 10 | 2.0 | 6.0 | 4.0 | 3.0 | 12 | 10 | ○ | 13 | 0.8 | 0.4 | 0.3 | 1.3 | 0.35 |
| Example 15 | 90 | Al | 10 | 2.0 | 4.5 | 3.3 | 2.3 | 3 | 13 | ○ | 11 | 1.0 | 0.4 | 0.3 | 1.3 | 0.35 |
| Example 16 | 90 | Mg | 10 | 2.0 | 5.0 | 3.5 | 2.5 | 4 | 12 | ○ | 11 | 1.0 | 0.4 | 0.3 | 1.3 | 0.36 |
| Example 17 | 90 | Ca | 10 | 2.0 | 5.0 | 3.5 | 2.5 | 5 | 12 | ○ | 11 | 1.0 | 0.4 | 0.3 | 1.3 | 0.36 |
| Example 18 | 90 | Fe | 10 | 2.0 | 6.0 | 4.0 | 3.0 | 8 | 12 | ○ | 11 | 1.0 | 0.4 | 0.3 | 1.3 | 0.36 |
| Example 19 | 90 | Zn | 10 | 2.0 | 8.0 | 5.0 | 4.0 | 8 | 12 | ○ | 11 | 1.0 | 0.4 | 0.3 | 1.3 | 0.36 |
| Example 20 | 90 | Si | 23 | 2.0 | 9.0 | 5.5 | 4.5 | 10 | 8 | Δ | 12 | 1.0 | 0.4 | 0.3 | 1.3 | 0.36 |
| Example 21 | 90 | Si | 10 | 2.0 | 5.0 | 3.5 | 2.5 | 8 | 8 | Δ | 12 | 1.0 | 0.4 | 0.3 | 1.3 | 0.36 |
| Example 22 | 90 | Al | 10 | 2.0 | 5.0 | 3.5 | 2.5 | 8 | 12 | ○ | 12 | 1.0 | 0.4 | 0.3 | 1.3 | 0.36 |
| Example 23 | 90 | Ca, Al, Fe | 10 | 2.0 | 5.0 | 3.5 | 2.5 | 5 | 24 | ○ | 13 | 1.0 | 0.4 | 0.3 | 1.4 | 0.34 |
| Comparative Example 1 | 100 | - | 0 | 4.0 | 9.0 | 6.5 | 2.3 | 4 | 1 | × | 10 | 1.0 | 2.3 | 0.6 | 3.8 | 1.45 |

**[Table 6]**

| | CO₂ Recovery Temperature | CO₂ Recovery Amount |
|---|---|---|
| | (°C) | (% by weight) |
| Example 10 | 108 | 18 |
| Example 11 | 116 | 17 |
| Example 12 | 115 | 6 |
| Example 13 | 104 | 15 |
| Example 14 | 101 | 13 |
| Example 15 | 121 | 15 |
| Example 16 | 108 | 16 |
| Example 17 | 108 | 16 |
| Example 18 | 108 | 16 |
| Example 19 | 108 | 16 |
| Example 20 | 100 | 16 |
| Example 21 | 102 | 16 |
| Example 22 | 108 | 16 |
| Example 23 | 100 | 16 |
| Comparative Example 1 | 130 | 10 |

As explained above, the solid material for recovering carbon dioxide according to the present invention is obviously excellent in adsorption and recovery of the carbon dioxide. Moreover, the solid material for recovery is obtained by granulating sodium ferrite, which is a solid having carbon dioxide recovering performance, together with the organic binder to have a millimeter size, and the solid material has high hardness and may thus be filled in a carbon dioxide adsorbing tower as it is.

## Claims

1. A solid material for recovering carbon dioxide, the solid material comprising:
from 50% by weight to 99% by weight of sodium ferrite; and
from 1% by weight to 50% by weight of an organic binder or an inorganic binder, wherein
the solid material has an average particle diameter of 1 mm to 10 mm and has a specific surface area of 1 m²/g to 50 m²/g, and
an axial ratio of an average major axis diameter to an average minor axis diameter of primary particles of the sodium ferrite is from 1 to 2.

2. The solid material of claim 1, wherein
the solid material has a hardness of 3 kgf/mm² to 30 kgf/mm² and
the axial ratio is from 1 to 5.

3. The solid material of claim 1 or 2, wherein
the solid material has a powder pH value of 8 to 14.

4. The solid material of any one of claims 1 to 3, wherein
a molar ratio of Na/Fe of the sodium ferrite is from 0.7 to 1.3.

5. The solid material of any one of claims 1 to 4, wherein
the solid material comprises the organic binder, and
the organic binder is a polymer material selected from polystyrene, polyethylene, polypropylene, nitrile-butadiene, silicone, fluororesin, and cellulose.

6. The solid material of any one of claims 1 to 5, wherein
the solid material comprises the organic binder, and
the organic binder has a weight-average molecular weight of greater than or equal to 1,000 and less than or equal to 100,000.

7. The solid material of any one of claims 1 to 4, wherein
the solid material comprises the inorganic binder, and
the inorganic binder is an inorganic material including one or more of Na, Li, K, Ca, Mg, Si, Al, Ca, Fe, and Zn.

8. A method for producing the solid material of any one of claims 1 to 7, the method comprising:
a step of performing solid-phase reaction of a material including iron oxide and an alkali compound including sodium to obtain powder; and
a step of kneading the powder obtained by the solid-phase reaction and an organic binder or an inorganic binder together to obtain a mixture and molding the mixture.
